# EUROPEAN PATENT SPECIFICATION

(11) **EP 4 092 296 B1**
(45) Date of publication and mention of the grant of the patent: **23.04.2025**
(21) Application number: 21305667.4
(22) Date of filing: 21.05.2021
(51) Int. Cl.: F16K 5/04, F16K 11/076, F16K 11/085

(54) **A COCK FOR A VALVE AND A VALVE COMPRISING SUCH COCK**
HAHN FÜR EIN VENTIL UND VENTIL MIT EINEM SOLCHEN HAHN
ROBINET DE SOUPAPE ET SOUPAPE COMPRENANT UN TEL ROBINET

(43) Date of publication of application: 23.11.2022
(73) Proprietor: Alfa Laval Moatti, 78990 Elancourt (FR)
(72) Inventor: KA, Abou, 78280 GUYANCOURT (FR)
(74) Representative: Alfa Laval Attorneys

(56) References cited:
- EP-A1- 0 346 216
- CN-A- 112 178 240
- CN-B- 104 653 808
- DE-A1- 102016 111 273
- JP-U- S56 170 365
- US-A- 4 326 697
- US-A- 5 074 525
- US-A- 5 833 214

## Description

### TECHNICAL FIELD

The present invention relates to valves and in particular to valve cocks. These cocks may be used in the field of changeover valves, such as those used for maintenance of filters, but may also be used for other types of valves.

### TECHNOLOGICAL BACKGROUND

Valves having a rotatable cock have been known for years. Generally, the valve body and the rotatable cock are both made of metal, and the fluid-tightness between the valve body and the rotatable cock is merely achieved by as little a clearance as possible between the valve body and the rotatable cock.

In an attempt to improve fluid-tightness, document WO 87/00598 A1 discloses a four-position valve comprising a valve body having several openings and a rotatable obstructing member also known as a rotatable cock. For preventing leakage when the cock obstructs an opening, a gasket is provided on a side of the cock. The gasket is held in position by an external member.

Although this system has proved satisfactory, there is still room for improvement. For instance, especially in small-sized valves, the external member itself may not remain in its desired position. Thus, after using the valve for a while, the fitting between the external member and the gasket may loosen, which may result in a change of position of the gasket in its seat, or in the external member protruding radially beyond the gasket. Therefore, in the long run, the sealing function of the valve may be affected.

A cock for a valve comprising the features of the preamble of claim 1 is known from document CN 104 653 808.

Documents DE 10 2016 111273, EP 0 346 216, US 5 833 214, US 5 074 525, CN 112 178 240 and JP S56 170365U are disclosing various valve cock configurations.

As a consequence, there is a need for a cock which can prevent leakage in a more reliable manner.

### SUMMARY OF THE INVENTION

This problem is solved by a cock according to claim 1. The present invention relates to a cock for a valve having at least one opening for passage of fluid, the cock comprising a body configured to be movably mounted in a seat of the valve, at least one seal fastened to the body and configured to variably open or close the opening according to a position of the cock within the valve seat, wherein the seal is fastened to the body by an insert fitted between the seal and the body, wherein the insert holds at least a portion of the seal under compression load.

The fluid may be a liquid or a gas, in particular water or oil. The valve may have at least two openings for the passage of fluid, namely at least one inlet opening and one outlet opening. The openings may be located about the seat of the valve so that the cock, more particularly its seal, is configured to variably open or close at least one of said openings according to a position thereof. In an embodiment, the body of the cock may be rotatably mounted in the seat of the valve and the seal may be configured to variably open or close the opening according to an angular position of the cock within the valve seat. In another embodiment, the body may be slidably mounted in the valve seat and the seal may be configured to variably open or close the opening according to a longitudinal position of the cock within the valve seat.

The seal may take the form of a gasket. The seal may be made of an elastomeric material. As an elastomer, the seal can deform and adapt to the shape of the valve seat around the opening, thereby providing satisfactory sealing with no leakage. In other embodiments, the seal may be made of a material configured to undergo running-in by actuation of the cock within the valve body. With such a material, the running-in allows to reach a very tight compatibility between the shape of the seal and the shape of the valve body, thereby providing satisfactory sealing with no leakage. For instance, the seal may be made of plastics.

The cock may comprise a plurality of seals, e.g. when the cock is required, in a certain position thereof, to seal a plurality of openings at the same time.

As indicated above, the seal is fastened to the body by an insert fitted between the seal and the body. When the cock includes plural seals, this may apply to some or all of them. That is, fastening means between the seal and the body include an insert. The insert may be made of a material other than the seal, e.g. plastics or metal (including alloys), in order to provide tight fastening between the seal and the body. The insert is fitted between the seal and the body, notably in a geometric sense. That is, at least a portion of the insert may have a first side in contact with the seal and a second side, opposite the first side, in contact with the body. The seal and the body may extend, respectively, beyond the first and second sides.

Thanks to the above-described structure, the seal is reliably fastened to the body, through the insert, and the insert may not protrude beyond the seal towards the opening. Therefore, leakage is reliably prevented.

In some embodiments, the seal is assembled to the insert and the insert is fastened to the body. Thus, the seal, the insert and the body are, one to one, different parts exhibiting interfaces therebetween. Fastening means between the insert and the seal may include engagement of corresponding shapes, overmolding, bonding, e.g. through adhesive, etc. Fastening means between the insert and the body may include engagement of corresponding shapes, bonding, e.g. through adhesive, screws, etc.

In some embodiments, the insert is removably fitted on the body. Thus, when the seal is worn, it can be easily replaced by dismounting only the insert with the seal thereon and fastening a new seal onto the former body, through fitting of either the former insert or a new insert.

In some embodiments, means for fastening the insert to the body are accessible from a side opposite the seal with respect to the body. For instance, means for fastening the insert to the body may be accessible from a side longitudinally opposite the seal with respect to the body, or radially (i.e. perpendicularly to the axial or longitudinal direction) opposite the seal with respect to the body. In these embodiments, the means for fastening are not accessible on the sealing surface between the seal and the valve seat. This ensures that the means for fastening do not protrude beyond the seal towards the valve seat and do not interfere with the sealing function of the valve.

In some embodiments, the insert has an undercut for limiting separation of the insert from the seal. The undercut may be provided at an interface between the seal and the insert. The undercut of the insert may abut a portion of the seal (possibly an undercut too) in order to counter any movement trying to separate the seal from the insert. Therefore, the seal is more reliably assembled to the insert.

In some embodiments, the undercut comprises a negative draft angle of a cavity of the seal in which the insert is fitted. A draft angle is easy to manufacture and provides a large surface for the undercut, hence further improving reliability.

In some embodiments, the insert comprises at least one threaded hole. The hole may be a through hole or a blind hole. A threaded rod, e.g. a screw, may be inserted in the threaded hole of the insert for fastening the insert with respect to the body of the cock. The body may comprise a hole at a corresponding location, the hole being threaded or the body being clamped between the insert and a separate member, e.g. the screw head or a bolt.

According to the invention, the insert holds at least a portion of the seal under compression load. That is, the insert exerts compression on a portion of the seal, e.g. by clamping such a portion between the insert and the body. The position of the seal with respect to the body is accordingly better controlled and held.

In some embodiments, the seal extends beyond the insert towards the body. In other words, the seal may have a protruding portion, protruding beyond a side of the insert to be fastened to the body. When the insert is fastened to the body, the protruding portion must deform, whereby the insert holds the protruding portion of the seal under compression. In addition to better controlling the position of the seal with respect to the body, since the protruding portion may be provided at an interface between the seal and the body, the protruding portion enhances sealing and helps avoiding penetration of fluid between the body and the insert.

In some embodiments, the body extends along a longitudinal direction and comprises a longitudinal wall, and the seal and the insert are mounted on one side of the longitudinal wall and the other side of the longitudinal wall defines a passageway for fluid. This structure is simple to manufacture and efficient.

In some embodiments, the longitudinal wall is offset with respect to an axis (e.g. axis of rotation) of the body. Preferably, the longitudinal wall is offset towards the seal, thus leaving more room for the fluid passageway. Pressure losses through the valve are thus reduced.

In some embodiments, the seal may have a closed contour surrounding the insert. In these embodiments, the above-described undercut may retain the insert within the seal, e.g. to make sure that the seal and the insert do not separate from each other. Further reliability of the cock is thereby obtained. More generally, the seal may define a blind cavity in which the insert is fitted, said cavity opening out towards an inner side of the body.

In some embodiments, a full surface of the insert is exposed to either the seal or the body. That is, the insert has no surface exposed to the fluid. In this way, sealing between the insert and the seal on the one hand, and the insert and the body on the other hand, is improved, and therefore the operation of the cock as a whole is made more reliable.

In some embodiments, the seal comprises a protruding sealing lip configured to surround said opening of the valve. Since the sealing lip is configured to surround the opening, and not necessarily to adapt to the exact shape of the opening, a single shape of sealing lip can be used for various designs of openings. In addition, compression of a sealing lip can be accurately controlled, whereby the sealing performances are enhanced.

In some embodiments, the cock comprises a plurality of said seals and a plurality of said inserts, each of the seals being assembled to a corresponding one of the inserts to form a seal-insert set, the seal-insert sets being separated from one another, in a longitudinal direction of the body, by respective transverse separation walls of the body. Each seal-insert set may have some or all of the previously described optional features. This kind of cock is useful for multi-stage valves, such as double or triple valves. The transverse separation walls enables to separate the sealing functions of the respective seal-insert sets, thereby enabling different designs or different position configurations for each set and stage, but also partial replacement and maintenance of the cock. The cock body itself may comprise a plurality of assembled cock members, each of the cock members being associated to a corresponding seal-insert set.

In another aspect, the present invention also relates to a valve, in particular a three-way valve, comprising the cock as previously described.

In yet another aspect, the present invention relates to a changeover valve comprising a primary fluid inlet, a first secondary fluid outlet and a second secondary fluid outlet, and a primary fluid outlet, a first secondary fluid inlet and a second secondary fluid inlet, and a cock as previously described, wherein the transverse separation wall is provided with a sealing member so as to isolate the primary fluid inlet, the first secondary fluid outlet and the second secondary fluid outlet from the primary fluid outlet, the first secondary fluid inlet and the second secondary fluid inlet, and the cock is configured to variably enable fluid passage from the primary fluid inlet to the first secondary fluid outlet and/or the second secondary fluid outlet, depending on the position of the body, and to variably enable fluid passage from the first secondary fluid inlet and/or the second secondary fluid inlet to the primary fluid outlet, depending on the position of the body. A changeover valve is an example of a double valve (or two-stage valve) as previously mentioned, wherein a first stage comprises the primary fluid inlet, the first secondary fluid outlet and the second secondary fluid outlet and a second stage comprises the primary fluid outlet, the first secondary fluid inlet and the second secondary fluid inlet.

### BRIEF DESCRIPTION OF THE DRAWINGS

The invention and advantages thereof will be better understood upon reading the detailed description which follows, of embodiments of the invention given as non-limiting examples. This description refers to the appended drawings, wherein:
- Fig. 1 is an exploded perspective view of a cock according to a first embodiment;
- Fig. 2A is a cross-sectional view along plane IIA-IIA of Fig. 1;
- Fig. 2B is a cross-sectional view along plane IIB-IIB of Fig. 1;
- Fig. 3 is a perspective view of a cock according to a second embodiment;
- Fig. 4 is a cross-sectional view along plane IV-IV of Fig. 3;
- Fig. 5 is a general perspective view of a changeover valve comprising the cock of the first embodiment;
- Figs. 6A, 6B, 6C are perspective cross-sectional views, along plane VI of Fig. 5, showing the flow of fluid in the changeover valve depending on the position of the cock.

### DETAILED DESCRIPTION OF EMBODIMENTS

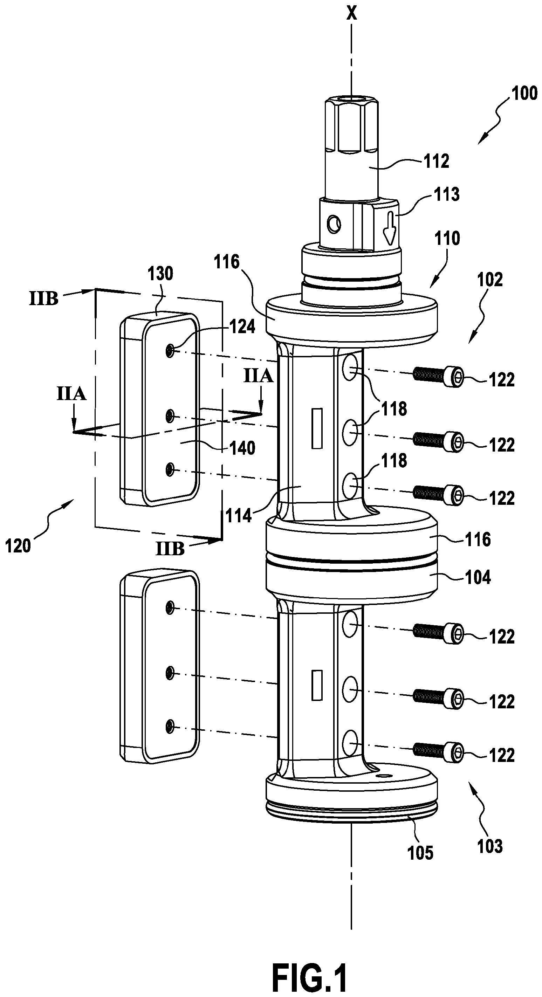

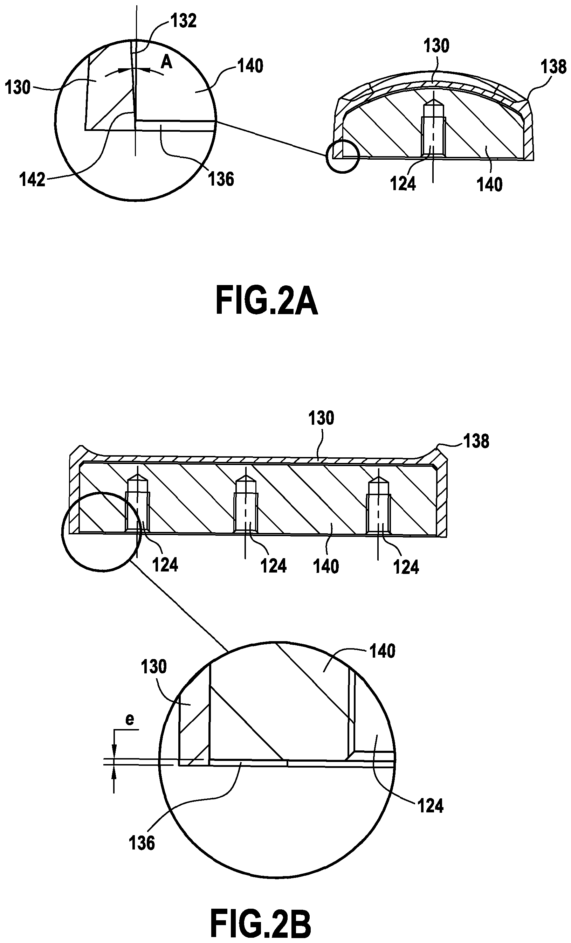

A cock 100 according to a first embodiment is described in relation to Figs. 1, 2A and 2B. The cock 100 may be used in a valve having at least one opening for the passage of fluid, as will be explained later in greater detail. In this embodiment, the cock 100 is adapted for a two-stage valve and comprises a first stage portion 102 and a second stage portion 103. The first stage portion 102 and the second stage portion 103 are, in this case, stacked along a longitudinal or axial direction X of the cock 100. As can be seen in Fig. 1, in this embodiment, the first stage portion 102 and the second stage portion 103 are similar, therefore only the first stage portion 102 will be described. The second stage portion 103 may have none, some or all of the features of the first stage portion 102. Besides, cocks comprising only one stage or more than two stages are also contemplated. Sealing members 104, 105, here in the form of O-rings, may be provided to isolate the stages from one another.

The cock 100 comprises a body 110 which is configured to be movably mounted in a seat of a valve. Here, the body 110 generally extends along the longitudinal direction X and is to be mounted in the valve seat so as to be rotatable about its longitudinal axis X. The cock 100 may comprise a key 112, integral with the body 110 or provided as a separate part fastened thereto, for controlling rotation of the body 110. In this embodiment, the key 112 is provided at one end of the body 110 in the longitudinal direction.

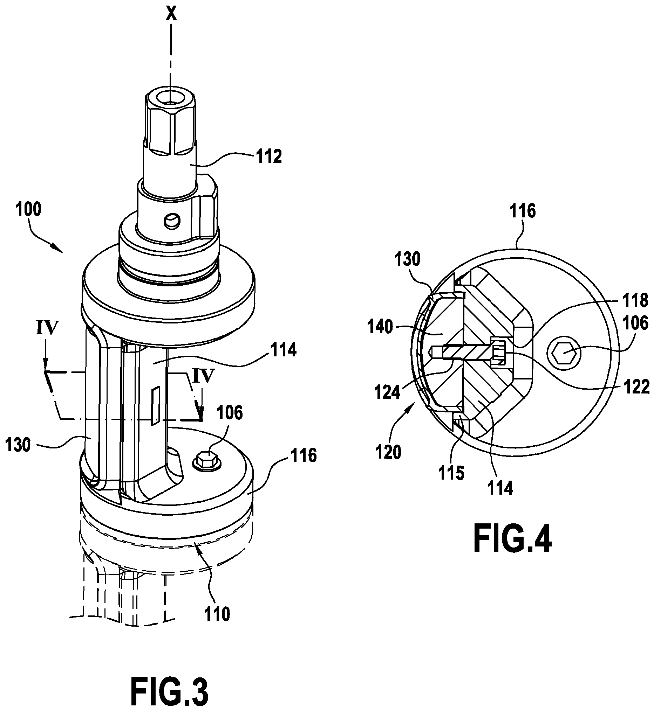

The body 110 comprises a longitudinal wall 114 extending along the longitudinal direction X. As can be seen more clearly in figures 3 and 4, relating to another embodiment but similar in that respect, the longitudinal wall 114 is offset with respect to the axis of rotation X of the body 110. The longitudinal wall 114 may be delimited by transverse separation walls 116, here at each end of the longitudinal wall 114. The transverse separation walls 116 may extend radially, i.e. perpendicularly to the longitudinal axis X. The previously mentioned sealing members 104, 105 may be provided on the transverse separation walls 116 or at an end thereof.

Each stage of the body 110 thus defines, on one side of the longitudinal wall 114, a passageway for fluid (here on the side of the longitudinal wall 114 closer to the longitudinal axis X), and on the other side of the longitudinal wall 114, a housing for mounting a seal-insert set 120. In this embodiment, the mounting of the seal-insert set 120 is achieved through fastening means, e.g. screws 122, engaged in through holes 118 of the body 110 and fastened to corresponding means, e.g. threaded holes 124, of the seal-insert set 120. Here, the through holes 118 extend substantially radially through the longitudinal wall 114. Although three through holes 118, screws 122 and threaded holes 124 are represented for each stage in Figs. 1, 2A and 2B, a different number may be selected by the skilled person. The fastening means may be arranged regularly or irregularly, and aligned or not, along the longitudinal axis. Other fastening means, which can be disassembled or not, are possible.

The seal-insert set 120 comprises a seal 130 and an insert 140. The seal 130 may be an elastomeric seal or a plastic seal. For instance, the seal 130 may be made of at least one of polytetrafluoroethylene (PTFE), nitrile butadiene rubber (NBR), fluoroelastomer (e.g. fluorocarbon-based such as FKM or FPM), ethylene propylene diene monomer (EPDM) rubber, etc. The hardness of the seal 130 may range from 60 to 90 Shore A. However, other materials may be considered for the seal 130, depending on the application.

The seal 130 is configured to be fastened to the body 110, specifically in the housing defined at one side of the longitudinal wall 114. Thus, as the body 110 rotates, the seal 130 variably opens or closes openings of the valve, either partially or totally.

In order to provide a reliable fastening between the seal 130 and the body 110, the insert 140 is provided to be fitted between the seal 130 and the body 110. That is, the seal 130 is fastened to the body 110 through the insert 140. Removing the insert 140 would make the seal 130 and the body 110 independent from each other.

In this case, the insert 140 is made of metal, e.g. steel. However, other materials such as plastics are contemplated. In this embodiment, the seal 130 is overmolded onto the insert 140. In this case, the insert 140 should comprise, or even be made of, a material that withstands overmolding of the seal 130 thereon. Of course, other techniques are encompassed for assembling the seal 130 to the insert 140, which may involve different requirements for the seal 130 and the insert 140.

In order to improve adhesion between the seal 130 and the insert 140, a surface of the insert 140 to contact the seal 130 may be sandblasted or otherwise roughened (e.g. knurled) before combining the seal 130 to the insert 140. More generally, the insert 140 may have a greater surface roughness on surfaces to contact the seal 130 than on other surfaces thereof, e.g. surfaces to contact the body 110.

Furthermore, in order to prevent the seal 130 from separating from the insert 140, the insert 140 may have an undercut 142. For instance, as shown in Fig. 2A, the insert 140 may have a trapezoidal cross-section, the sloped sides of which may interface with the seal 130, and the smaller base of the trapezoidal cross-section being closer to the body 110 than the larger base of the trapezoidal cross-section. As the seal 130 is overmolded onto the insert 140, the material of the seal matches the shape of the undercut 142, thereby forming a corresponding undercut 132 of the seal 130 by which the insert 140 is held.

Thus, in this embodiment, the undercut 142 comprises a negative draft angle A of a cavity of the seal 130 in which the insert 140 is fitted. In an example, the draft angle A may range from 2° to 15°. Other types of undercuts are possible.

Fig. 2B shows, as opposed to Fig. 2A, that the cross-section of the insert 140 along a transverse plane (i.e. along a plane orthogonal to the longitudinal direction X) may be rectangular, or more generally devoid of undercuts. As variations, it is contemplated that undercut and non-undercut sides are swapped, or that the insert 140 has undercuts for limiting separation of the insert 140 from the seal 130 on all sides or only some sides.

The threaded holes 124 are provided in the insert 140, which is generally made of a stiffer material than the seal 130. Therefore, the insert 140 provides a more reliable fastening of the seal 130 to the body 110. Furthermore, thanks to the screws 122 and although other fastening means may provide the same function, the insert 140 is removably fitted on the body 110. Rivets or the like may be used as fastening means, but they would prevent the insert 140 from being removed. In this embodiment, the threaded holes are blind holes extending in the insert 140 in a radial direction, but they may be through holes as well, depending on the required threaded length, and/or extend in any suitable direction.

In view of the above, the seal 130 is assembled to the insert 140 and the insert 140 is fastened to the body 110.

As shown in Fig. 2B, in this embodiment, the seal 130 extends beyond the insert 140 towards the body 110. Specifically, the seal 130 may comprise a protruding portion 136 which is to directly contact the body 110. The protruding portion 136 has a non-zero thickness e in the mounting direction (here a transverse direction), measured from the end of the insert 140 closest to the body 110 to the end of the seal 130 closest to the body 110, at the seal-insert interface. The thickness e may range from 0.1 millimeters (mm) to 2 mm, preferably from 0.2 mm to 1 mm. Since the protruding portion 136 protrudes, when the insert 140 is fastened to the body 110, the protruding portion 136 is compressed between the body 110 and the remaining of the seal 130 which is assembled to the insert 140. Depending on the tightening of the screws 122 or the like, the protruding portion 136 may be more or less clamped between the remaining of the seal 130 and the longitudinal wall 114, hence the compression load.

A similar compression may be obtained without a protruding portion 136 of the seal 130, but with a protruding portion of the body 110, e.g. protruding towards the seal 130 by more than the available distance at rest. Thus, the protruding portion of the body 110 would put the seal under compression in a similar manner. However, this variant may make the manufacturing of the body 110 more complex, and thus more expensive.

In either case, it results that, as shown in Fig. 4 relating to another embodiment but similar in that respect, the insert 140 has no exposed surface to the fluid, since a full surface of the insert 140 is exposed to either the seal 130 or the body 110. Specifically, the radially outer surface and the lateral surfaces of the insert 140 are exposed to the seal 130, while the radially inner surface 140 is exposed to the body 110. Other arrangements are possible.

Besides, as represented in Fig. 1, the means for fastening the insert 140 to the body 110, namely the screws 122, are accessible from a side opposite the seal 130 with respect to the body 110. Specifically, the screws 122 are accessible from a side of the longitudinal wall 114 opposite the seal 130. In this way, the seal 130 is radially more outwards than the insert 140 and the screws 122. Therefore, it is made sure that neither the insert 140 nor the fastening means between the seal 130 and the body 110 interfere with the sealing function of the cock 100.

Figures 3 and 4 present a cock according to other embodiments. In these figures, elements corresponding or identical to those of the first embodiment have the same reference sign, and description thereof is omitted.

A cock 100 according to a second embodiment is described in reference to Fig. 3 and 4. The cock 100 is a one-stage cock, however the body 110 may comprise assembling means, such as at least one bolt 106, for assembling with other similar bodies, thus obtaining a multi-stage cock. However, as shown in relation to the first embodiment, multi-stage cock bodies may also be manufactured as integral parts. The bolt 106 may extend through respective holes in adjacent transverse separation walls 116 of the respective bodies.

In order to fasten the seal 130 to the body 110, the seal 130 is first assembled to the insert 140, e.g. by overmolding. Then, the seal-insert set 120 is positioned in the housing, namely along the longitudinal wall 114 and between the transverse separation walls 116. Screws 122 are screwed into the through holes 118 of the body 110 and the threaded holes 124, from a side of the longitudinal wall 114 opposite the seal-insert set 120. Note that in this embodiment, the through holes 118 of the body 110 are configured to house the screw heads so that the screws 122 do not protrude beyond the longitudinal wall 114, in order not to impede the fluid flow in the valve.

As an alternative or in addition to the screws 122, at least one spring may be provided between the seal-insert set 120 and the body 110, in order to bias the seal 130 against the opening to seal (i.e. away from the body 110). For instance, the spring may comprise one or more spring washers arranged around a screw 122, in a gap between the body 110 and the insert 140.

Besides, as shown in Fig. 4, and as possibly implicitly present in the previous embodiments, the housing-side of the longitudinal wall 114 may be shaped, e.g. machined, to define a desired shape for the housing. For instance, the longitudinal wall 114 may have a U-shaped portion in cross-section (see U branches 115 in Fig. 4), and/or have projections configured to secure the position of the seal-insert set 120, here in the tangential direction, e.g. against rotating movements of the body about the longitudinal axis X.

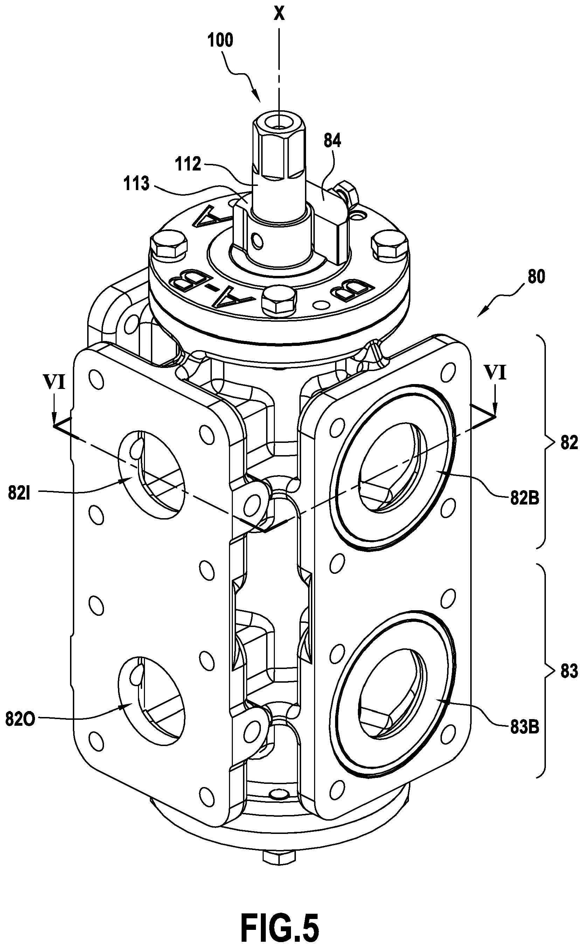

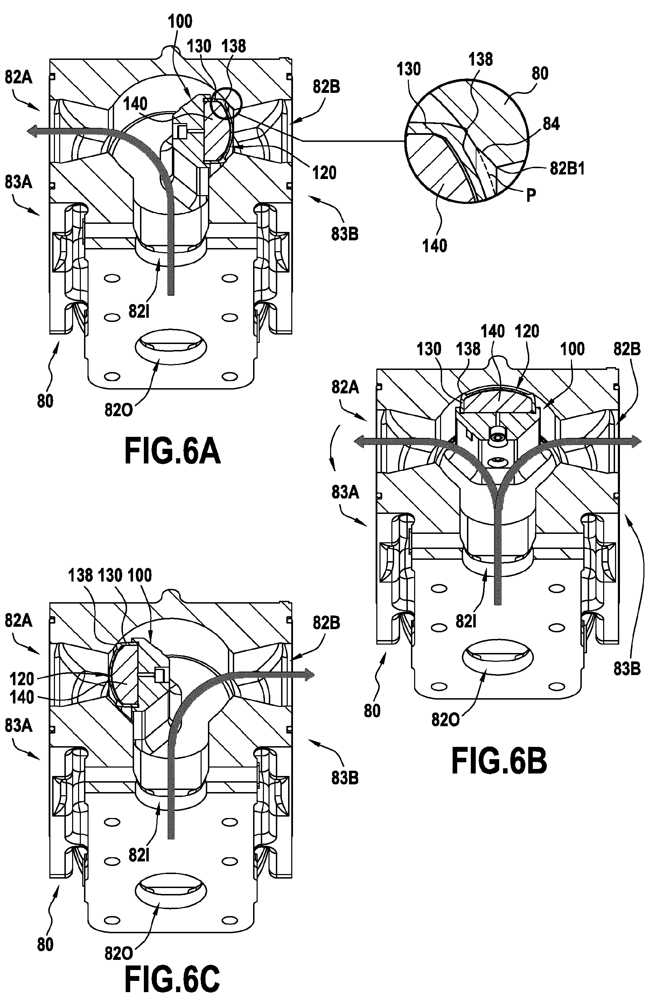

The cock 100 may be used in a valve such as that illustrated in Fig. 5. Figure 5 shows a valve 80 having at least one opening, namely a double three-way valve known as a changeover valve. The changeover valve 80 has two stages 82, 83, each stage being built as a three-way valve. Namely, as to the first stage, the changeover valve 80 comprises a primary fluid inlet 82I, a first secondary fluid outlet 82A (see Fig. 6A) and a second secondary fluid outlet 82B. As to the second stage 83, the changeover valve 80 comprises a primary fluid outlet 820, a first secondary fluid inlet 83A and a second secondary fluid inlet 83B. That is, the fluid openings of the changeover valve are organized in a primary set (primary fluid inlet 82I and outlet 82O), a first secondary set or A-set (first secondary fluid inlet 83A and outlet 82A) and a second secondary set or B-set (second secondary fluid inlet 83B and outlet 82B).

The changeover valve 80 also includes the cock 100 according to the first embodiment, however other embodiments of the cock, such as the second embodiment or yet another embodiment, could be used instead.

The cock 100 is rotatably mounted in the changeover valve 80 in a manner known *per se* in the art. The cock key 112 is provided with a protrusion 113 which may abut against a stopper 84 of the valve body, thereby defining the rotation range of the cock 100 within the valve seat. As shown in Fig. 1, an indicator (e.g. an arrow) may be provided on the key 312, here on the protrusion 313, to indicate, in relation with markings such as A, A-B, B on the valve body, in which position the cock 100 is. The cock 100 may be configured to remain in an intermediate position, thereby providing a partial opening or closing of an inlet or outlet.

Use of the changeover valve 80 is illustrated in Figs. 6A, 6B and 6C, which represent the fluid flow in the first stage of the valve 80. In Fig. 6A, the cock 600 is in the A position, meaning that the A-set of openings is open and the B-set of openings is closed. As can be seen in this figure, the seal 130 hermetically closes the second secondary fluid outlet 82B, e.g. through a sealing lip 138.

Specifically, as mentioned before, the seal 130 may comprise a protruding sealing lip 138 configured to surround an opening of the valve, e.g. the second secondary fluid outlet 82B and the first secondary fluid outlet 82A. The sealing lip 138 may taper towards the opening (i.e. away from the insert 140), in order to increase its compression capability. A smooth transition between the sealing lip 138 and the remaining of the seal 130 may be provided, as shown in Figs. 2A, 2B and 6A, in order to support the deformation of the sealing lip 138. For instance, as shown, a laterally outer surface of the sealing lip 138 may be chamfered. In addition to the above advantages, a chamfer helps to correctly position the cock with respect to the valve seat.

Although one sealing lip 138 is illustrated, multiple sealing lips, successively surrounding the opening and/or adapted to various opening sizes and shapes, may be provided. Besides, a prestressed element (such as a V-shaped spring) may be embedded in the seal 130, e.g. below the sealing lip 138, to more accurately bias the sealing lip 138 towards the valve body.

As can be seen in the enlarged portion of Fig. 6A, the opening 82B1 of the valve seat leading to the second secondary fluid outlet 82B may be recessed with respect to an opening-closing path P of the sealing lip 138 (i.e. a path of the sealing lip 138 when the cock 100 is actuated in order to open and/or close the second secondary fluid outlet 82B). This avoids that the sealing lip 138 be damaged by a sharp edge; instead, a transition portion 84 is provided between the opening-closing path P of the sealing lip 138 and the opening 82B1, the transition portion being configured to progressively compress the sealing lip 138 when the sealing lip 138 is moved along the transition portion 84. The transition portion 84 may have an intermediate orientation between the opening-closing path P of the sealing lip 138 and the opening 82B1.

Part or all of these features may be applied to any or all of the openings which the sealing lip 138 is supposed to isolate in some operating conditions.

In the A-position shown in Fig. 6A, fluid may flow from the primary inlet 82I to the first secondary outlet 82A, and from the first secondary inlet 83A to the primary outlet 820. In this configuration, the changeover valve 80 may conduct fluid from a circuit into a main filter mounted on the A-side of the valve. Maintenance of the main filter may be required without interrupting the treatment of the fluid flowing in the circuit. For this purpose, the cock 100 may be rotated through the A-B position illustrated on Fig. 6B, up to the B position illustrated on Fig. 6C. In this way, it is possible to progressively and uninterruptedly divert the flow of fluid from the main filter connected to the A-set of openings to the B-set of openings, to which an auxiliary filter may be connected. As the cock 100 hermetically closes the first secondary fluid outlet 82A and the first secondary fluid inlet 83A, it is possible to disconnect the main filter from the changeover valve 80. Once the main filter has been maintained and reconnected, the reverse operation may be performed to drive the fluid back to the main filter and possibly maintain the auxiliary filter.

Note that, as the first stage 82 is used for fluid to be filtered and the second stage 83 is used for filtered fluid, proper sealing between the two stages is advantageous. In this respect, sealing members such as the O-rings 104, 105 are helpful. More generally, as the first stage 82 and the second stage 83 are sealed from each other, they can be designed and handled differently, both from the point of view of the cock and from that of the valve body.

Furthermore, the seal in contact with unfiltered fluid wears more quickly than the seal in contact with filtered fluid. In this respect, as per the above explanations, it is advantageous that each seal can be replaced independently from each other.

The changeover valve 80 may be used with a different direction of fluid flow, and/or for other applications. The cock 100 according to different embodiments and its variations as previously described may also be used with different types of valves.

Although the present invention has been described by referring to specific exemplary embodiments, modifications may be provided to these examples without the departing from the general scope of the invention as defined by the claims. For instance, although the cock has been described as rotating in the illustrated embodiments, the skilled person would acknowledge that similar advantages can be obtained in a valve wherein the cock is slidably mounted and such embodiment is also encompassed. Besides, although some materials have been described, other materials may be envisaged, depending on the requirements of the intended application. More generally, individual characteristics of the different illustrated/mentioned embodiments may be combined in additional embodiments. Therefore, the description and the drawings should be considered in an illustrative rather than in a restrictive sense.

## Claims

1. A cock (100) for a valve (80) having at least one opening for passage of fluid, the cock comprising a body (110) configured to be movably mounted in a seat of the valve (80), at least one seal (130) fastened to the body (110) and configured to variably open or close the opening according to a position of the cock within the valve seat, wherein the seal (130) is fastened to the body (110) by an insert (140) fitted between the seal (130) and the body (110),
**characterized in that**
the insert (140) holds at least a portion (136) of the seal (130) under compression load.

2. The cock (100) as claimed in claim 1, wherein the seal (130) is assembled to the insert (140) and the insert (140) is fastened to the body (110).

3. The cock (100) as claimed in claim 1 or 2, wherein the insert (140) is removably fitted on the body (110).

4. The cock (100) as claimed in any one of claims 1 to 3, wherein means for fastening the insert (140) to the body (110) are accessible from a side opposite the seal (130) with respect to the body (110).

5. The cock (100) as claimed in any one of claims 1 to 4, wherein the insert (140) has an undercut (142) for limiting separation of the insert (140) from the seal (130).

6. The cock (100) as claimed in claim 5, wherein the undercut (142) comprises a negative draft angle (A) of a cavity of the seal (130) in which the insert (140) is fitted.

7. The cock (100) as claimed in any one of claims 1 to 6, wherein the insert (140) comprises at least one threaded hole (124).

8. The cock (100) as claimed in any one of claims 1 to 7, wherein the body (110) extends along a longitudinal direction and comprises a longitudinal wall (114), and wherein the seal (130) and the insert (140) are mounted on one side of the longitudinal wall (114) and the other side of the longitudinal wall (114) defines a passageway for fluid.

9. The cock (100) as claimed in claim 8, wherein the longitudinal wall (114) is offset with respect to an axis of rotation (X) of the body (110).

10. The cock (100) as claimed in any one of claims 1 to 9, wherein a full surface of the insert (140) is exposed to either the seal (130) or the body (110).

11. The cock (100) as claimed in any one of claims 1 to 10, wherein the seal (130) comprises a protruding sealing lip (138) configured to surround said opening of the valve.

12. The cock (100) as claimed in any one of claims 1 to 11, comprising a plurality of said seals (130) and a plurality of said inserts (140), each of the seals (130) being assembled to a corresponding one of the inserts (140) to form a seal-insert set (120), the seal-insert sets being separated from one another, in a longitudinal direction of the body (110), by respective transverse separation walls (116) of the body.

13. A valve (80), in particular a three-way valve, comprising the cock (100) as claimed in any one of claims 1 to 12.

14. A changeover valve (80) comprising a primary fluid inlet (82I), a first secondary fluid outlet (82A) and a second secondary fluid outlet (82B), and a primary fluid outlet (820), a first secondary fluid inlet (83A) and a second secondary fluid inlet (83B), and a cock (100) as claimed in claim 12, wherein the transverse separation wall (116) is provided with a sealing member (104, 105) so as to isolate the primary fluid inlet (82I), the first secondary fluid outlet (82A) and the second secondary fluid outlet (82B) from the primary fluid outlet (820), the first secondary fluid inlet (83A) and the second secondary fluid inlet (83B), and the cock (100) is configured to variably enable fluid passage from the primary fluid inlet (82I) to the first secondary fluid outlet (82A) and/or the second secondary fluid outlet (82B), depending on the position of the body (110), and to variably enable fluid passage from the first secondary fluid inlet (83A) or the second secondary fluid inlet (83B) to the primary fluid outlet (820), depending on the position of the body (110).

## Patentansprüche

1. Hahn (100) für ein Ventil (80), das mindestens eine Öffnung für einen Durchgang von Fluid aufweist, wobei der Hahn einen Körper (110), der dafür konfiguriert ist, beweglich in einem Sitz des Ventils (80) angebracht zu werden, mindestens eine Dichtung (130), die an dem Körper (110) befestigt und dafür konfiguriert ist, die Öffnung gemäß einer Position des Hahns innerhalb des Ventilsitzes veränderlich zu öffnen oder zu schließen, umfasst, wobei die Dichtung (130) durch einen Einsatz (140) an dem Körper (110) befestigt ist, der zwischen der Dichtung (130) und dem Körper (110) eingebaut ist, **dadurch gekennzeichnet, dass**
der Einsatz (140) mindestens einen Abschnitt (136) der Dichtung (130) unter einer Druckbelastung hält.

2. Hahn (100) nach Anspruch 1, wobei die Dichtung (130) an dem Einsatz (140) montiert ist und der Einsatz (140) an dem Körper (110) befestigt ist.

3. Hahn (100) nach Anspruch 1 oder 2, wobei der Einsatz (140) abnehmbar an dem Körper (110) eingebaut ist.

4. Hahn (100) nach einem der Ansprüche 1 bis 3, wobei Mittel zum Befestigen des Einsatzes (140) an dem Körper (110) von einer Seite, die in Bezug auf den Körper (110) der Dichtung (130) gegenüberliegt, zugänglich sind.

5. Hahn (100) nach einem der Ansprüche 1 bis 4, wobei der Einsatz (140) einen Unterschnitt (142) zum Begrenzen einer Trennung des Einsatzes (140) von der Dichtung (130) aufweist.

6. Hahn (100) nach Anspruch 5, wobei der Unterschnitt (142) einen negativen Freiwinkel (A) eines Hohlraums der Dichtung (130), in dem der Einsatz (140) eingebaut ist, umfasst.

7. Hahn (100) nach einem der Ansprüche 1 bis 6, wobei der Einsatz (140) mindestens ein Gewindeloch (124) umfasst.

8. Hahn (100) nach einem der Ansprüche 1 bis 7, wobei sich der Körper (110) entlang einer Längsrichtung erstreckt und eine Längswand (114) umfasst, und wobei die Dichtung (130) und der Einsatz (140) auf einer Seite der Längswand (114) angebracht sind und die andere Seite der Längswand (114) eine Durchgangsbahn für Fluid definiert.

9. Hahn (100) nach Anspruch 8, wobei die Längswand (114) in Bezug auf eine Drehachse (X) des Körpers (110) versetzt ist.

10. Hahn (100) nach einem der Ansprüche 1 bis 9, wobei eine vollständige Oberfläche des Einsatzes (140) entweder zu der Dichtung (130) oder zum Körper (110) freigelegt ist.

11. Hahn (100) nach einem der Ansprüche 1 bis 10, wobei die Dichtung (130) eine vorspringende Abdichtungslippe (138) umfasst, die dafür konfiguriert ist, die Öffnung des Ventils zu umgeben.

12. Hahn (100) nach einem der Ansprüche 1 bis 11, der eine Vielzahl von den Dichtungen (130) und eine Vielzahl von den Einsätzen (140) umfasst, wobei jede der Dichtungen (130) an einem entsprechenden der Einsätze (140) montiert ist, um einen Dichtung-Einsatz-Satz (120) zu bilden, wobei die Dichtung-Einsatz-Sätze, in einer Längsrichtung des Körpers (110), durch jeweilige quer verlaufende Trennwände (116) des Körpers voneinander getrennt sind.

13. Ventil (80), insbesondere ein Dreiwegeventil, das den Hahn (100) nach einem der Ansprüche 1 bis 12 umfasst.

14. Umschaltventil (80), das einen primären Fluideinlass (82I), einen ersten sekundären Fluidauslass (82A) und einen zweiten sekundären Fluidauslass (82B) und einen primären Fluidauslass (820), einen ersten sekundären Fluideinlass (83A) und einen zweiten sekundären Fluideinlass (83B), und einen Hahn (100) nach Anspruch 12 umfasst,
wobei die quer verlaufende Trennwand (116) mit einem Abdichtungselement (104, 105) versehen ist, um so den primären Fluideinlass (82I), den ersten sekundären Fluidauslass (82A) und den zweiten sekundären Fluidauslass (82B) von dem primären Fluidauslass (820), dem ersten sekundären Fluideinlass (83A) und dem zweiten sekundären Fluideinlass (83B) zu isolieren, und der Hahn (100) dafür konfiguriert ist, veränderlich, in Abhängigkeit von der Position des Körpers (110), einen Fluiddurchgang von dem primären Fluideinlass (82I) zu dem ersten sekundären Fluidauslass (82A) und/oder dem zweiten sekundären Fluidauslass (82B) zu ermöglichen und veränderlich, in Abhängigkeit von der Position des Körpers (110), einen Fluiddurchgang von dem ersten sekundären Fluideinlass (83A) oder dem zweiten sekundären Fluideinlass (83B) zu dem primären Fluidauslass (820) zu ermöglichen.

## Revendications

1. Robinet (100) pour une vanne (80) comportant au moins une ouverture pour le passage de fluide, le robinet comprenant un corps (110) configuré pour être monté de manière mobile dans un siège de la vanne (80), au moins un joint (130) fixé sur le corps (110) et configuré pour ouvrir ou fermer de manière variable l'ouverture, selon une position du robinet à l'intérieur du siège de vanne, dans lequel le joint (130) est fixé sur le corps (110) par un insert (140) ajusté entre le joint (130) et le corps (110), **caractérisé en ce que**
l'insert (140) maintient au moins une partie (136) du joint (130) sous une charge de compression.

2. Robinet (100) selon la revendication 1, dans lequel le joint (130) est assemblé à l'insert (140) et l'insert (140) est fixé sur le corps (110).

3. Robinet (100) selon la revendication 1 ou 2, dans lequel l'insert (140) est ajusté de manière amovible sur le corps (110).

4. Robinet (100) selon l'une quelconque des revendications 1 à 3, dans lequel des moyens permettant de fixer l'insert (140) sur le corps (110) sont accessibles depuis un côté opposé au joint (130) par rapport au corps (110).

5. Robinet (100) selon l'une quelconque des revendications 1 à 4, dans lequel l'insert (140) comporte une contre-dépouille (142) pour limiter la séparation de l'insert (140) du joint (130).

6. Robinet (100) selon la revendication 5, dans lequel la contre-dépouille (142) comprend un angle de dépouille négatif (A) d'une cavité du joint (130) dans laquelle l'insert (140) est ajusté.

7. Robinet (100) selon l'une quelconque des revendications 1 à 6, dans lequel l'insert (140) comprend au moins un trou fileté (124)

8. Robinet (100) selon l'une quelconque des revendications 1 à 7, dans lequel le corps (110) s'étend le long d'une direction longitudinale et comprend une paroi longitudinale (114), et dans lequel le joint (130) et l'insert (140) sont montés sur un côté de la paroi longitudinale (114) et l'autre côté de la paroi longitudinale (114) définit une voie de passage pour un fluide.

9. Robinet (100) selon la revendication 8, dans lequel la paroi longitudinale (114) est décalée par rapport à un axe de rotation (X) du corps (110).

10. Robinet (100) selon l'une quelconque des revendications 1 à 9, dans lequel une surface complète de l'insert (140) est exposée soit au joint (130) soit au corps (110).

11. Robinet (100) selon l'une quelconque des revendications 1 à 10, dans lequel le joint (130) comprend une lèvre d'étanchéité en saillie (138) configurée pour entourer ladite ouverture de la vanne.

12. Robinet (100) selon l'une quelconque des revendications 1 à 11, comprenant une pluralité desdits joints (130) et une pluralité desdits inserts (140), chacun des joints (130) étant assemblé avec un insert correspondant des inserts (140) pour former un ensemble joint-insert (120), les ensembles joint-insert étant séparés les uns des autres, dans une direction longitudinale du corps (110), par des parois de séparation transversales respectives (116) du corps.

13. Vanne (80), en particulier vanne à trois voies, comprenant le robinet (100) selon l'une quelconque des revendications 1 à 12.

14. Vanne de commutation (80), comprenant une entrée de fluide primaire (82I), une première sortie de fluide secondaire (82A) et une deuxième sortie de fluide secondaire (82B), et une sortie de fluide primaire (820), une première entrée de fluide secondaire (83A) et une deuxième entrée de fluide secondaire (83B), et un robinet (100) selon la revendication 12,
dans laquelle la paroi de séparation transversale (116) est pourvue d'un élément d'étanchéité (104, 105) de sorte à isoler l'entrée de fluide primaire (82I), la première sortie de fluide secondaire (82A) et la deuxième sortie de fluide secondaire (82B) de la sortie de fluide primaire (820), de la première entrée de fluide secondaire (83A) et de la deuxième entrée de fluide secondaire (83B), et le robinet (100) est configuré pour permettre de manière variable un passage de fluide de l'entrée de fluide primaire (82I) vers la première sortie de fluide secondaire (82A) et/ou la deuxième sortie de fluide secondaire (82B), en fonction de la position du corps (110), et pour permettre de manière variable un passage de fluide de la première entrée de fluide secondaire (83A) ou de la deuxième entrée de fluide secondaire (83B) vers la sortie de fluide primaire (820), en fonction de la position du corps (110).
